# FASCICULE DE BREVET EUROPEEN

(11) **EP 0 594 512 B1**
(45) Date de publication et mention de la délivrance du brevet: **12.11.1997**
(21) Numéro de dépôt: 93420370.4
(22) Date de dépôt: 16.09.1993
(51) Int. Cl.: H04N 9/64

(54) **Circuit d'identification de standard télévisé**
Schaltung zur Erkennung von Fernsehstandards
Television standard identification circuit

(30) Priorité: 18.09.1992 FR 9211554
(43) Date de publication de la demande: 27.04.1994
(73) Titulaire: SGS-THOMSON MICROELECTRONICS S.A., 94250 Gentilly (FR)
(72) Inventeur: Maldonado, Pierre-Jean, F-38180 Seyssins (FR); Quemener, Sylvain, F-38850 Chirens (FR)
(74) Mandataire: de Beaumont, Michel

(56) Documents cités:
- EP-A- 0 146 777
- IEEE TRANSACTIONS ON CONSUMER ELECTRONICS vol. 31, no. 3, Août 1985, NEW YORK, US pages 147 - 155 PERY ET AL 'a fully automatic multistandard tv chrominance decoder'

## Description

La présente invention concerne le domaine de la télévision couleur et, plus particulièrement, un circuit d'identification de standard dans un téléviseur couleur pouvant recevoir plusieurs standards.

Pour pouvoir décoder un signal vidéo et restituer une image couleur, un téléviseur couleur doit connaître le standard de télévision couleur utilisé à l'émission. Les téléviseurs couleur modernes possèdent un système d'identification automatique de la norme ou du standard utilisé.

Parmi les standards utilisés, on peut citer les standards PAL et SECAM. Pour ces deux standards, chaque ligne du signal vidéo composite comprend un top de synchronisation, une salve d'identification de plusieurs oscillations du signal de la sous-porteuse de chrominance, puis le signal proprement dit correspondant à l'image, comprenant la superposition d'informations de luminance et d'informations de chrominance, ces dernières étant supportées par le signal de luminance.

Les caractéristiques de la sous-porteuse de chrominance dans les différents standards PAL, SECAM et autres sont définies dans des documents publiés relatifs à ces standards, et ne seront pas décrites en détail ici. On va toutefois rappeler brièvement les caractéristiques essentielles des standards PAL et SECAM car ces indications serviront à mieux comprendre l'invention.

Dans le standard PAL, la fréquence de la sous-porteuse de chrominance est la même pour toutes les lignes. Pour les salves d'identification, la phase du vecteur de modulation alterne entre + et -135° d'une ligne à la suivante. La fréquence de la sous-porteuse de chrominance est normalisée à 4,43 MHz.

Dans le standard SECAM, on utilise deux fréquences de sous-porteuses de chrominance qui alternent d'une ligne à la suivante, respectivement à 4,25 MHz et 4,40 MHz. Ces deux sous-porteuses de chrominance sont modulées en fréquence.

Les téléviseurs multi-standards actuels doivent posséder en interne des systèmes distincts destinés à décoder les signaux de luminance et de chrominance pour chacun des standards utilisés. Ces téléviseurs doivent donc préalablement effectuer une identification du standard reçu.

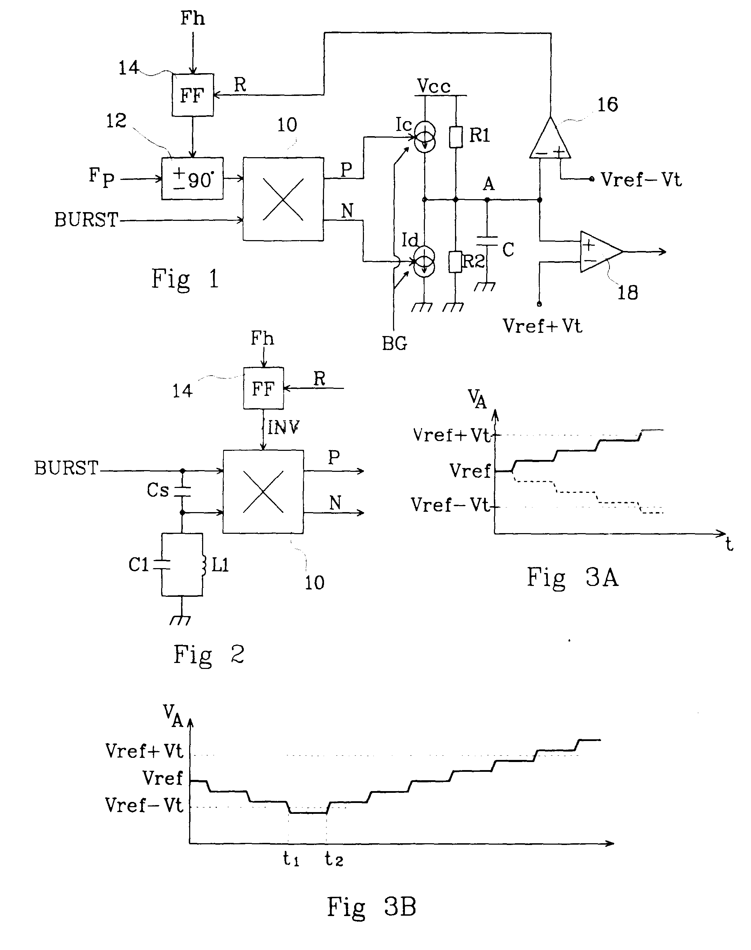

La figure 1 représente schématiquement un circuit classique d'identification de standard PAL. Ce circuit comprend un comparateur de phase 10 délivrant un signal P actif si la différence de phase entre deux signaux d'entrée du comparateur est positive ou un signal N actif si cette différence de phase est négative. Le comparateur 10 reçoit sur une première entrée les salves (BURST) susmentionnées à la fréquence de sous-porteuse 4,43 MHz. L'autre entrée du comparateur 10 reçoit un signal Fp à la fréquence de sous-porteuse par l'intermédiaire d'un circuit 12 permettant de donner au signal Fp une phase de +90° ou -90°. Le choix de +90° ou -90° est déterminé par l'état d'une bascule 14 (FF) cadencée par un signal Fh de fréquence égale à la fréquence ligne. Le rôle de cette bascule 14 sera compris ultérieurement.

Le signal P d'indication de signe positif commande une source de courant Ic reliée à une tension d'alimentation Vcc. Le signal N d'indication de signe négatif commande une source de courant Id reliée en série entre la source Ic et la masse. Les sources Ic et Id délivrent un courant de même valeur. Le point de connexion entre les sources Ic et Id est relié à une borne A d'une capacité C dont l'autre borne est reliée à la masse. En l'absence de commande de l'une des sources Ic et Id, la tension aux bornes de la capacité C est tirée vers une valeur Vref=Vcc/2 par un pont de résistances R1 et R2. On note VA la tension sur la borne A et aux bornes de la capacité C.

Les signaux P et N ne sont représentatifs que lors des salves BURST qui se produisent, comme on l'a précédemment indiqué, au début de chaque ligne pendant des intervalles de temps courts (de l'ordre de 4 microsecondes sur 64 microsecondes de durée de ligne). Pour tenir compte de ceci, les sources de courant Ic et Id sont validées par un signal de fenêtre BG actif seulement pendant la durée de chaque salve BURST.

Avec cette configuration, la capacité C se charge ou se décharge d'une valeur constante durant chaque salve BURST selon, respectivement, que le signal P ou le signal N est actif. Les résistances R1 et R2 sont de forte valeur pour ne pas notablement perturber la charge de la capacité C d'une salve à la suivante.

Les éléments non encore décrits de la figure 1 le seront ultérieurement.

La figure 2 représente les éléments différents par rapport à la figure 1 d'un circuit d'identification classique de standard SECAM. La bascule 14 est ici reliée au comparateur de phase 10 dans une configuration où l'état de la bascule détermine si l'indication de signe fournie par le comparateur de phase 10 est inversée ou non par rapport au résultat de la comparaison. Une première entrée du comparateur 10 reçoit les salves BURST. La deuxième entrée du comparateur 10 est reliée à la masse par l'intermédiaire d'une capacité C1 et d'une inductance L1 reliées en parallèle, et à la première entrée par l'intermédiaire d'une capacité Cs. La fréquence de résonance du circuit L1C1 est réglée à une fréquence intermédiaire entre la fréquence de la sous-porteuse rouge et la fréquence de la sous-porteuse bleue. Les autres éléments non représentés du circuit d'identification de standard SECAM sont identiques à ceux de la figure 1.

Dans les circuits des figures 1 et 2, si l'on ignore la présence de la bascule 14, l'indication de signe fournie par le comparateur 10 s'inverse d'une ligne à la suivante lorsque le standard reçu est bon. Le rôle de la bascule 14, dont l'état bascule à chaque ligne, est d'assurer que le comparateur 10 fournisse une indication de signe de polarité constante d'une ligne à la suivante lorsque le standard reçu est bon.

La figure 3A montre l'évolution de la tension VA aux bornes de la capacité C lorsque le standard reçu par l'un des circuits des figures 1 et 2 est le bon. Selon l'état initial de la bascule 14, la tension VA progresse à sens constant par paliers se succédant à la fréquence ligne, soit en augmentant depuis la valeur Vref (en trait plein), soit en diminuant depuis la valeur Vref (en pointillés). Les phases de transition d'un palier au suivant correspondent aux phases de charge ou de décharge de la capacité C pendant les salves BURST. Pour identifier le standard reçu, il suffit de détecter que la tension VA atteint une tension seuil haute Vref+Vt ou une tension seuil basse Vref-Vt. Si le standard reçu est mauvais, la tension VA oscille aléatoirement autour de la valeur Vref et, en principe, n'atteint pas les tensions seuil Vref+Vt et Vref-Vt.

Dans une réalisation particulière de circuit d'identification, on cherche à obtenir une charge de la capacité C lorsque le standard reçu est le bon. Dans ce cas lorsque l'état initial de la bascule 14 est erroné, c'est-à-dire lorsque la capacité C commence par se décharger quand le standard reçu est bon, il faut inverser l'état de la bascule 14 pour inverser la polarité de l'indication de signe (P, N) fournie par le comparateur de phase 10. Cette inversion est réalisée grâce, comme le représente la figure 1, à un comparateur 16 qui fournit un signal R de "remise à l'heure" de la bascule 14 lorsque la tension aux bornes de la capacité C atteint la valeur seuil basse Vref-Vt.

La figure 3B montre l'évolution de la tension VA, dans le cas ci-dessus, lorsque le standard reçu est bon. L'état initial de la bascule 14 est erroné. La tension VA commence par décroître par paliers. A un instant t1, la tension VA franchit la tension seuil basse Vref-Vt et le signal R de remise à l'heure de la bascule 14 est activé. Tant que le signal R est actif, la bascule 14 reste à son dernier état, ce qui équivaut à une inversion de l'état de la bascule lors de la prochaine phase de transition commençant à un instant t2. A partir de l'instant t2, la tension VA croît et franchit de nouveau la tension seuil Vref-Vt ; le signal R est désactivé. Alors, la tension VA se met à croître par paliers et finit par atteindre la tension seuil haute Vref+Vt, ce qui est détecté par un comparateur 18. Alors, le comparateur 18 indique que le standard reçu est identifié.

La présente invention, comme on le verra ultérieurement, s'applique seulement à un tel circuit d'identification à un seul seuil de détection (Vref+Vt).

Le fonctionnement réel des circuits des figures 1 et 2 n'est pas idéal. En fait, chacun de ces circuits peut détecter un mauvais standard comme étant le bon par suite de la présence de bruit dans les signaux reçus et de phénomènes de variation de phase parasites. Ces phénomènes aléatoires entraînent, sur une longue durée, autant d'indications de signe positif que d'indications de signe négatif en sortie du comparateur 10. Toutefois, sur une courte durée, il peut apparaitre un nombre suffisant d'indications positives par rapport aux indications négatives pour que la tension aux bornes de la capacité C atteigne le seuil de détection Vref+Vt, ce qui entraîne une fausse détection.

Une solution pour remédier à ce problème consiste à augmenter la durée avant détection en ralentissant la progression de la tension VA. Ceci est effectué en diminuant la valeur des courants Ic et Id ou la valeur des résistances de rappel R1 et R2. Cette solution entraîne toutefois une diminution de la sensibilité du circuit d'identification et l'on ne pourra plus identifier le standard de signaux très bruités. La présence de bruit entraîne, même si le standard reçu est bon, l'occurrence de temps à autre d'indications de signe de mauvaise polarité. Ces indications parasites peuvent empêcher la tension VA d'atteindre le seuil de détection, surtout si la progression de la tension VA est ralentie.

Une autre solution consiste à mettre en parallèle plusieurs circuits d'identification fonctionnant selon des critères de détection différents. Cette solution est complexe.

Encore une autre solution consiste, avant de sélectionner un standard, à vérifier les indications des différents circuits d'identification de standard et à recommencer une phase d'identification (ramener la tension aux bornes de la capacité C à la valeur Vref), jusqu'à ce qu'un seul des circuits d'identification indique une détection. Cette méthode est longue ; une phase d'identification se fait environ sur deux trames.

Un objet de la présente invention est de prévoir un circuit d'identification de standard à un seul seuil de détection, particulièrement fiable tout en restant simple et ayant une bonne sensibilité dans le bruit.

Cet objet est atteint selon l'invention grâce à un fonctionnement symétrique du circuit (à courants de charge et de décharge de la capacité C égaux) lorsque la tension VA est dans une plage comprenant le seuil de remise à l'heure (Vref-Vt), et à un fonctionnement asymétrique (à courant de décharge supérieur au courant de charge) lorsque la tension VA est dans une plage comprenant le seuil de détection (Vref+Vt).

La présente invention vise plus particulièrement un circuit d'identification de standard télévisé comprenant : un comparateur de phase monté selon une configuration pour fournir une indication de signe tendant à avoir toujours la même polarité lorsque le standard est celui à identifier ; des sources de courant constant de même valeur de charge et de décharge d'une capacité, ces sources étant activées respectivement par l'une et l'autre des polarités de ladite indication lors d'intervalles de temps périodiques de longueur constante ; une bascule associée au comparateur de phase pour basculer la polarité de l'indication de signe si la tension aux bornes de la capacité atteint une première tension seuil extrême ; un détecteur de standard, actif lorsque la tension aux bornes de la capacité franchit une deuxième tension seuil extrême. Selon l'invention il est prévu des moyens actifs lorsque la tension aux bornes de la capacité entre dans une plage comprenant la deuxième tension seuil extrême, pour accroître d'un facteur prédéterminé le courant de la source de charge ou de décharge qui tend à éloigner la tension aux bornes de la capacité de la deuxième tension seuil extrême ; ladite plage commençant à une tension seuil intermédiaire entre les première et deuxième tensions seuil extrêmes.

Selon un mode de réalisation de la présente invention, lesdits moyens comprennent un deuxième comparateur recevant en entrée la tension aux bornes de la capacité et ladite tension seuil intermédiaire, et une source de courant constant supplémentaire reliée, sous l'action du deuxième comparateur, en parallèle sur la source de courant de charge ou de décharge qui tend à éloigner la tension aux bornes de la capacité de la tension seuil extrême.

Selon un mode de réalisation de la présente invention, le deuxième comparateur comprend un étage différentiel à deux transistors, ladite source de courant supplémentaire formant la charge d'émetteur des transistors, une borne flottante de la capacité étant reliée au collecteur et à la base d'un premier des transistors.

Selon un mode de réalisation de la présente invention, ledit premier transistor est monté selon une configuration Darlington.

Selon un mode de réalisation de la présente invention, la source de courant supplémentaire est formée par un transistor relié en parallèle sur la base et l'émetteur d'un transistor de sortie de miroir de courant, formant la source de courant sur laquelle la source de courant supplémentaire doit être reliée en parallèle.

Ces objets, caractéristiques et avantages ainsi que d'autres de la présente invention seront exposés en détail dans la description suivante de modes de réalisation particuliers faite en relation avec les figures jointes parmi lesquelles :
les figures 1 et 2, précédemment décrites, représentent sous forme simplifiée deux circuits classiques d'identification de standard ;
les figures 3A et 3B, précédemment décrites, représentent des évolutions de la tension aux bornes d'une capacité des circuits des figures 1 et 2 ;
la figure 4 représente un mode de réalisation classique de sources de courant de charge et de décharge de la capacité des circuits des figures 1 et 2 ;
la figure 5 représente un mode de réalisation d'un dispositif selon la présente invention incorporé dans le circuit de la figure 4 ; et
la figure 6 représente l'évolution de la tension aux bornes de la capacité dans un cas où l'on aurait un fonctionnement asymétrique sur toute la plage comprise entre un seuil de détection et un seuil de remise à l'heure.

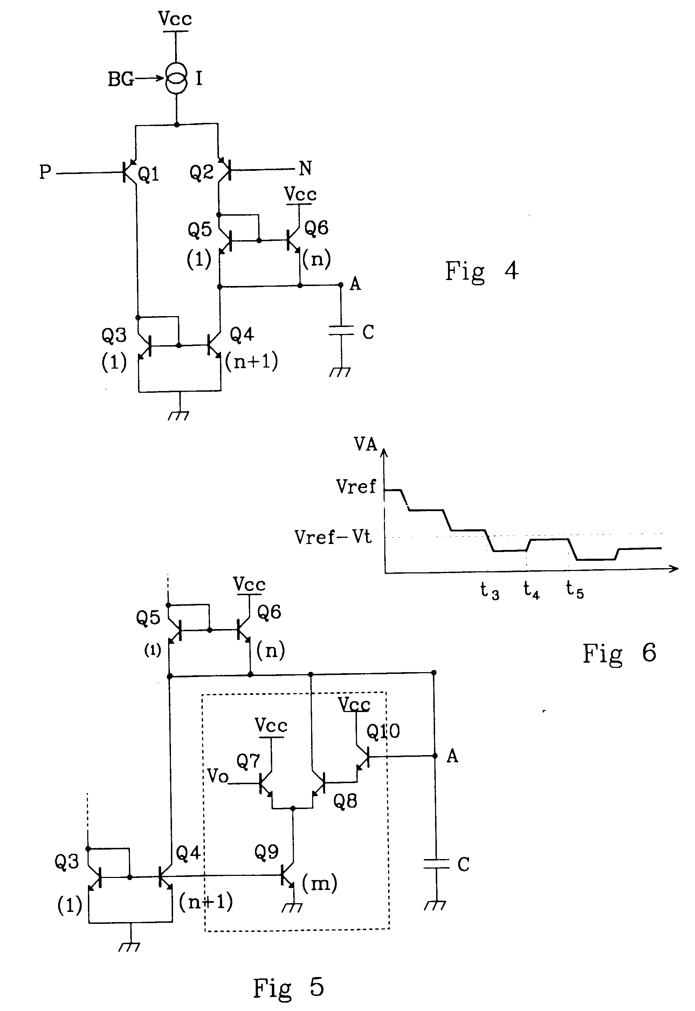

La figure 4 représente une façon classique de réaliser les sources de courant de charge et de décharge Ic, Id des circuits d'identification des figures 1 et 2. Les sorties d'indication de signe P et N du comparateur 10 des figures précédentes sont appliquées aux entrées d'un étage différentiel à deux transistors PNP Q1 et Q2. Les émetteurs des transistors Q1 et Q2 sont chargés par une source de courant constant I reliée à la tension Vcc. La source I est en outre activée par le signal BG de fenêtre de salve. Le transistor Q1 reçoit sur sa base le signal P et son collecteur est relié à l'entrée d'un miroir de courant formé de transistors NPN Q3 et Q4. Le transistor Q3 est connecté en diode, c'est-à-dire que son collecteur et sa base sont reliés ensemble. Le collecteur et la base du transistor Q3 forment l'entrée du miroir et sont reliés à la base du transistor Q4. Le collecteur du transistor Q4 forme la sortie du miroir. Les émetteurs des transistors Q3 et Q4 sont reliés à la masse.

Le transistor Q2 reçoit sur sa base le signal N et son collecteur est relié à l'entrée d'un miroir formé de transistors NPN Q5 et Q6 connectés de la même manière que les transistors Q3 et Q4, le transistor Q5 étant celui connecté en diode. Le collecteur du transistor Q6 est relié à la tension Vcc et les émetteurs des transistors Q5 et Q6 sont reliés au collecteur du transistor Q4 et à la borne A de la capacité C. De plus, le miroir Q3, Q4 est un miroir multiplieur par un facteur n+1 et le miroir Q5, Q6 est un miroir multiplieur par un facteur n. Ceci est obtenu en choisissant adéquatement les surfaces des transistors Q3 à Q6.

Lorsque le signal N est actif, le transistor Q2 est bloqué et le transistor Q1 est passant. Le courant de la source I passe intégralement dans le transistor Q1 et se retrouve à l'entrée du miroir Q3, Q4. On retrouve dans le collecteur du transistor Q4 un courant de valeur (n+1)I déchargeant la capacité C. Lorsque le signal P est actif, le transistor Q1 est bloqué et le transistor Q2 est passant. Le courant I passe intégralement dans le transistor Q2 et se retrouve à l'entrée du miroir Q5, Q6. Le courant de collecteur du transistor Q6 s'établit à nI et la somme des courants d'émetteur des transistors Q5 et Q6, (n+1)I, charge la capacité C.

La figure 5 représente à l'intérieur d'un cadre en pointillés un mode de réalisation de dispositif selon l'invention permettant, dans le circuit de la figure 4, d'augmenter le courant de décharge de la capacité C d'un facteur constant lorsque la tension VA aux bornes de la capacité C devient supérieure à une valeur Vo sensiblement égale à Vref. Ce dispositif comprend un étage différentiel à deux transistors NPN Q7 et Q8. Les émetteurs des transistors Q7 et Q8 sont reliés au collecteur d'un transistor NPN Q9 relié en parallèle sur la base et l'émetteur du transistor Q4. Le rapport de surface entre les transistors Q9 et Q3 est égal à m. Avec cette configuration, le transistor Q9 sert de source de courant fournissant un courant égal au courant de collecteur du transistor Q3 multiplié par m. La base du transistor Q7 reçoit la tension Vo et le collecteur du transistor Q7 est relié à la tension Vcc. Le collecteur du transistor Q8 est relié à la borne A de la capacité C. Le transistor Q8 est monté en Darlington avec un transistor Q10 dont la base est reliée à la borne A et dont le collecteur est relié à la tension Vcc. Avec cette configuration, lorsque la tension sur la borne A est inférieure à Vo+Vbe (Vbe désignant la tension base-émetteur du transistor Q10), le transistor Q7 est passant et le transistor Q8 est bloqué. Alors, le transistor Q7 dérive la totalité du courant de collecteur du transistor Q9. Dans ces conditions, le fonctionnement du circuit est le même que celui de la figure 3.

Lorsque la tension VA devient supérieure à Vo+Vbe, le transistor Q8 devient passant et le transistor Q7 se bloque. Le courant de collecteur du transistor Q9 est alors intégralement dérivé de la borne A. Ce courant est nul lorsqu'on n'est pas en phase de décharge de la capacité C, c'est-à-dire lorsque le courant de collecteur du transistor Q3 est nul. En phase de décharge de la capacité C, celle-ci sera déchargée par un courant égal à (n+1+m)I, alors qu'en phase de charge, la capacité est chargée avec un courant égal à (n+1)I.

Ainsi, tant que la tension aux bornes de la capacité C reste inférieure à Vo+Vbe, la capacité est chargée ou déchargée, en fonction des indications de signe fournies par le comparateur de phase 10, avec un courant (n+1)I. Dès que la tension aux bornes de la capacité C dépasse la valeur Vo+Vbe, la capacité C est toujours chargée avec un courant (n+1)I mais déchargée avec un courant (n+1+m)I. Par conséquent, lorsque la tension aux bornes de la capacité C se trouve dans la plage comprise entre Vo+Vbe et Vref+Vt, on donne davantage de poids à une indication négative qu'à une indication positive.

Comme on l'a précédemment indiqué, lorsqu'un signal de mauvais standard est reçu, les indications de signe fournis par le comparateur 10 sont sensiblement aléatoires, et le nombre d'indications positives est égal au nombre d'indications négatives sur une longue durée. Toutefois, sur une courte durée, il peut s'avérer que le nombre d'indications positives est suffisamment supérieur au nombre d'indications négatives pour que la tension VA atteigne le seuil de détection Vref+Vt. En donnant davantage de poids aux indications négatives, on retarde l'instant où la tension VA est susceptible d'atteindre le seuil de détection et on augmente les chances d'avoir un même nombre d'indications négatives que d'indications positives, c'est-à-dire les chances de ne pas faire varier la tension aux bornes de la capacité C.

Par ailleurs, lorsqu'un signal du bon standard est reçu, en principe, toutes les indications de signe finiront par être des indications en majorité positives, ce qui entraine que le poids plus élevé affecté aux indications négatives affecte peu la vitesse de charge de la capacité C. De plus, le courant de charge ne devant pas être choisi à une valeur faible pour prolonger la durée de détection (c'était une des solutions classiques pour limiter les fausses détections), la sensibilité dans le bruit du circuit selon l'invention est peu affectée.

Un système entièrement asymétrique, c'est-à-dire où le courant de décharge est supérieur au courant de charge sur toute la plage de variation de la tension VA, n'est pas envisageable.

La figure 6 montre ce qui se produirait en pareil cas. Cette figure montre l'évolution de la tension VA lorsque le standard reçu serait bon et lorsque l'état initial de la bascule 14 serait initialement erroné. La tension VA commence par décroître par paliers et atteint le seuil Vref-Vt, par exemple à un instant t3 où la tension VA a une valeur proche de la valeur du palier précédent. Le signal R de remise à l'heure est activé et la bascule 14 reste à son état de l'instant t3 au début t4 de la prochaine phase de transition de palier. A l'instant t4, la tension VA croît, mais ne franchit pas de nouveau le seuil Vref-Vt, ce qui est tout à fait possible car le courant de charge est inférieur au courant de décharge. Par conséquent, le signal R reste actif et la bascule 14 reste au même état au début t5 de la prochaine phase de transition. A l'instant t5, la tension VA décroît... La tension VA ne pourra plus franchir le seuil Vref-Vt et on ne détectera jamais que le standard reçu est le bon.

On peut citer les valeurs numériques suivantes à titre d'exemple :
Vo = Vref = Vcc/2 ;
I = 50 microampères ;
C = 10 nanofarads ;
n = 4.

La valeur du courant de collecteur du transistor Q9 peut être choisie entre 10 à 30 % de celui du transistor Q4, par exemple 20 % avec m=1.

De nombreuses variantes et modifications de la présente invention apparaîtront à l'homme du métier. Par exemple, la base du transistor Q8 peut être directement reliée à la borne A de la capacité C. La tension Vo peut avoir n'importe quelle valeur voisine de Vref. Le courant de charge sera augmenté par rapport au courant de décharge si le seuil de détection de standard est le seuil bas Vref-Vt.

## Revendications

1. Circuit d'identification de standard télévisé comprenant :
- un comparateur de phase (10) monté selon une configuration pour fournir une indication de signe (P,N) tendant à avoir toujours la même polarité lorsque le standard est celui à identifier ;
- des sources de courant constant (Ic, Id) de même valeur de charge et de décharge d'une capacité (C), ces sources étant activées respectivement par l'une et l'autre des polarités de ladite indication lors d'intervalles de temps périodiques de longueur constante ;
- une bascule (14) associée au comparateur de phase pour basculer la polarité de l'indication de signe si la tension (VA) aux bornes de la capacité atteint une première tension seuil extrême (Vref-Vt) ;
- un détecteur (18) de standard, actif lorsque la tension aux bornes de la capacité franchit une deuxième tension seuil extrême (Vref+Vt) ;
caractérisé en ce qu'il comprend des moyens actifs lorsque la tension aux bornes de la capacité entre dans une plage comprenant la deuxième tension seuil extrême, pour accroître d'un facteur prédéterminé le courant de la source de charge ou de décharge qui tend à éloigner la tension aux bornes de la capacité de la deuxième tension seuil extrême ; ladite plage commençant à une tension seuil intermédiaire (Vo) entre les première et deuxième tensions seuil extrêmes.

2. Circuit d'identification de standard selon la revendication 1, caractérisé en ce que lesdits moyens comprennent un deuxième comparateur (Q7, Q8) recevant en entrée la tension aux bornes de la capacité (C) et ladite tension seuil intermédiaire (Vo), et une source de courant constant supplémentaire (Q9) reliée, sous l'action du deuxième comparateur, en parallèle sur la source de courant de charge ou de décharge qui tend à éloigner la tension aux bornes de la capacité de la tension seuil extrême (Vref+Vt).

3. Circuit d'identification de standard selon la revendication 2, caractérisé en ce que le deuxième comparateur comprend un étage différentiel à deux transistors (Q7, Q8), ladite source de courant supplémentaire (Q9) formant la charge d'émetteur des transistors, une borne flottante (A) de la capacité (C) étant reliée au collecteur et à la base d'un premier (Q8) des transistors.

4. Circuit d'identification selon la revendication 3, caractérisé en ce que ledit premier transistor (Q8) est monté selon une configuration Darlington.

5. Circuit d'identification selon la revendication 3, caractérisé en ce que la source de courant supplémentaire est formée par un transistor (Q9) relié en parallèle sur la base et l'émetteur d'un transistor de sortie (Q4) de miroir de courant, formant la source de courant sur laquelle la source de courant supplémentaire doit être reliée en parallèle.

## Patentansprüche

1. Schaltung zur Identifizierung bzw. Erkennung eines Fernsehstandards, welche umfaßt:
- einen Phasenkomparator (10) in einer solchen Schaltungs-Konfiguration, daß er eine Vorzeichen-Anzeige (P,N) liefert, welche bestrebt ist, konstant die gleiche Polarität aufzuweisen, wenn der Standard der zu identifizierende bzw. zu erkennende Standard ist,
- Konstantstromquellen (Ic,Id) von gleichem Betrag zum Auf- bzw. zum Entladen einer Kapazität (C), wobei diese Stromquellen durch die eine bzw. die andere der Polaritäten der genannten Anzeige während periodischer Zeitintervalle konstanter Dauer aktiviert werden,
- eine dem Phasenkomparator zugeordnete Kipp- bzw. Flip-Flop-Schaltung (14) zur Umschaltung der Polarität der Vorzeichenanzeige, wenn die Spannung (VA) über den Anschlüssen der Kapazität ein erstes Spannungsschwellwert-Extrem (Vref - Vt) erreicht,
- einen Standard - Detektor (18), der aktiviert bzw. betätigt wird, sobald die Spannung über der Kapazität ein zweites Spannungsschwellwert-Extrem (Vref + Vt) übersteigt,
dadurch gekennzeichnet, daß die Schaltung Schaltmittel aufweist, die betätigt werden, sobald die Spannung über der Kapazität in einen das zweite Spannungsschwellwert-Extrem einschließenden Bereich eintritt, und die den Strom der Lade- bzw. Entladestromquelle um einen vorgegebenen Faktor erhöhen, was im Sinne einer Änderung der Spannung über der Kapazität in Richtung weg von dem zweiten Spannungsschwellwert-Extrem wirkt, wobei der genannte Bereich bei einer Zwischen-Schwellwertspannung (Vo) zwischen dem ersten und dem zweiten Spannungsschwellwert-Extremen beginnt.

2. Schaltung zur Standard-Erkennung bzw. -identifizierung nach Anspruch 1, dadurch gekennzeichnet, daß die genannten Schaltmittel einen zweiten Komparator (Q7,Q8), der als Eingangsgrößen die Spannung über der Kapazität (C) und die genannte Zwischen-Schwellwertspannung (Vo) zugeführt erhält, sowie eine zusätzliche Konstantstrommquelle (Q9) aufweist, die durch die Wirkung des zweiten Komparators parallel zur Lade- bzw. Entladestromquelle geschaltet ist, was im Sinne einer Entfernung der über der Kapazität liegenden Spannung von dem Spannungsschwellwert-Extrem (Vref + Vo) wirkt.

3. Schaltung zur Standard-Erkennung bzw. -identifizierung nach Anspruch 2, dadurch gekennzeichnet, daß der zweite Komparator eine Differentialstufe mit zwei Transistoren (Q7,Q8) aufweist, wobei die genannte zusätzliche Stromquelle (Q9) die Emitterlast der Transistoren bildet und ein frei flottierender Anschluß (A) der Kapazität (C) mit dem Kollektor und der Basis eines ersten (Q8) der Transistoren verbunden ist.

4. Erkennungs- bzw. Identifizierschaltung nach Anspruch 3, dadurch gekennzeichnet, daß der genannnte erste Transistor (Q8) gemäß einer Darlington-Schaltkonfiguration geschaltet ist.

5. Erkennungs- bzw. Identifizierschaltung nach Anspruch 3, dadurch gekennzeichnet, daß die zusätzliche Stromquelle durch einen Transistor (Q9) gebildet wird, der parallel über der Basis und dem Emitter eines Stromspiegel-Ausgangstransistors (Q4) liegt, welcher die Stromquelle bildet, zu welcher die zusätzliche Stromquelle parallel geschaltet sein muß.

## Claims

1. A circuit for identifying a television Standard including:
- a phase comparator (10) connected according to a predetermined configuration so as to provide a sign indication (P, N) that tends to constantly have the same polarity when the Standard is the one to be identified;
- constant current sources (Ic, Id) having an equal value for charging and discharging a capacitor (C), the sources being respectively enabled by respective polarities of said sign indication during periodical time intervals having a constant duration;
- a flip-flop (14) associated with the phase comparator to switch the polarity of the sign indication if the voltage (VA) across the capacitor reaches a first extreme threshold voltage (Vref-Vt);
- a Standard detector (18), that is enabled when the voltage across the capacitor exceeds a second extreme threshold voltage (Vref+Vt);
characterized in that it comprises means that are enabled when the voltage across the capacitor enters a range including the second extreme threshold voltage, in order to increase by a predetermined factor the current of the charging or discharging source, which tends to separate the voltage across the capacitor from the second extreme threshold voltage, said range starting at an intermediate threshold voltage (Vo) between the first and second extreme threshold voltages.

2. The circuit of claim 1, characterized in that said means include a second comparator (Q7, Q8) receiving the voltage across the capacitor (C) and said intermediate threshold voltage (Vo), and an additional constant current source (Q9) connected, by the action of the second comparator, in parallel with the charging or discharging current source, which tends to separate the voltage across the capacitor from the second extreme threshold voltage (Vref+Vt).

3. The Standard identification circuit of claim 2, characterized in that the second comparator includes a differential stage having two transistors (Q7, Q8), said additional current source (Q9) forming the emitter charge of the transistors, a floating terminal (A) of the capacitor (C) being connected to the collector and to the base of a first transistor (Q8) of the two transistors.

4. The circuit of claim 3, characterized in that said first transistor (Q8) is connected as a Darlington circuit.

5. The circuit of claim 3, characterized in that the additional current source is formed by a transistor (Q9) connected in parallel to the base and emitter of a current mirror output transistor (Q4), forming the current source to which the additional current source has to be connected in parallel.
